# EUROPÄISCHE PATENTSCHRIFT

(11) **EP 1 475 348 B1**
(45) Veröffentlichungstag und Bekanntmachung des Hinweises auf die Patenterteilung: **21.06.2006**
(21) Anmeldenummer: 04008817.1
(22) Anmeldetag: 14.04.2004
(51) Int. Cl.: B67D 5/01

(54) **Ferngesteuerte Vorrichtung und Verfahren zum Beladen von Fahrzeugen mit Schüttgütern**
Remote controlled device and method for loading bulk materials into vehicles
Procédé et dispositif télécommandé pour charger des vehicules avec des matériaux en vrac

(30) Priorität: 08.05.2003 DE 20307086 U
(43) Veröffentlichungstag der Anmeldung: 10.11.2004
(73) Patentinhaber: FIRMA HAVER & BOECKER, D-59302 Oelde (DE)
(72) Erfinder: Thüer, Hermann, 59302 Oelde (DE)
(74) Vertreter: Dantz, Jan Henning

(56) Entgegenhaltungen:
- DE-A- 4 228 167
- US-A- 4 224 968
- US-A- 5 881 780
- US-A- 6 097 425
- US-A1- 2002 096 226
- US-B1- 6 499 929

## Beschreibung

Die Erfindung betrifft eine Vorrichtung nach dem Oberbegriff des Anspruches 1 sowie ein Verfahren zum Beladen eines Fahrzeugs mittels der Vorrichtung.

Aus der US 6 196 297 ist es bekannt, die Beladung von Lkws an sich mittels einer Videokamera zu beobachten, um Störungen des Beladeablaufs zu vermeiden. Diese Video- oder Videokameras benötigen jedoch den Einsatz von zusätzlichem Bedienpersonal. Der Fahrer selbst kann auf den eigentlichen Verladevorgang keinen Einfluß nehmen, was zu erhöhten Personalkosten führt.

Das aus der US 5 881 780 bekannte Vermessen eines Fahrzeugs mittels eines automatischen Scannersystems ist dagegen sehr aufwendig und relativ störanfällig. Zwar kann hier die Verladung quasi automatisch geschehen. Die Anlage ist jedoch nur schwer an Beladefahrzeuge unterschiedlichen Typs anpaßbar.

Aus der US 4 224 968 ist eine Anlage zum Befiillen eines Silofahrzeuges bekannt. Das Silo hat einen Füllturm, in den ein Teleskoprohr eingeführt werden kann. Das Teleskoprohr ist an einem Laufwagen angeordnet, welches in vertikaler Richtung verfahren werden kann, so dass es zum Befüllen in den Füllturm eingefahren werden kann. Nach Ende des Füllvorganges wird es in vertikaler Richtung so verfahren, dass der untere Rand im Abstand zur Oberkante des Füllturmes steht. Darüber hinaus ist das Teleskoprohr auswechselbar an einem Halter angebracht. Der Füllvorgang kann nur manuell durchgeführt werden, so dass der Betreiber der Füllanlage das entsprechende Personal bereitstellen muss.

Ausgehend von einem durch die US 4 224 968 vorbekannten Stand der Technik, liegt vor diesem Hintergrund der Erfindung die Aufgabe zugrunde, die Vorrichtung und das Verfahren zum Beladen von Fahrzeugen mittels schütt- und/oder fließfähigen Gütern derart weiterzuentwickeln und zu vereinfachen, daß bei geringem Personalaufwand mit einfachen Mitteln eine hohe Beladesicherheit erreicht wird.

Die Erfindung löst diese Aufgabe in Hinsicht auf die Vorrichtung durch den Gegenstand des Anspruches 1 und in Hinsicht auf das Verfahren durch den Gegenstand des Anspruches 8.

In Hinsicht auf die Vorrichtung ist demnach die Videokamera direkt oder über einen Steuerungsrechner an eine Sendeeinrichtung angeschlossen, mittels der die von der Videokamera aufgenommenen Bilder an eine portable Sende- und Empfangseinrichtung übertragbar sind und an die Sende- und Empfangseinrichtung sind zumindest eine Fernsteuerungseinrichtung und ein Monitor angeschlossen.

In Hinsicht auf das Verfahren unter Verwendung eines Monitors und einer Femsteuereinrichtung wird entsprechend mittels der portablen Sende- und Empfangseinrichtung, das Verladeteleskop betätigt und der Beladevorgang mit dem Schüttgut gesteuert, wobei der Monitor und die Fernsteuereinrichtung der Sende- und Empfangseinrichtung zugeordnet sind.

Da der Fahrer selbst über seine Fernsteuerungseinrichtung und den Monitor den Beladevorgang ganz oder teilweise steuern und überwachen kann, wird der an der Beladestation notwendige Personalaufwand bei Gewährleistung hoher Sicherheitsanforderungen reduziert, denn der Fahrer ist beim Beladen des Fahrzeuges sowieso anwesend, da er das Fahrzeug in die Beladstation ein- und aus dieser hinausfahren muss. Der apparative Aufwand zur Realisierung der Fernsteuerung ist dabei gering.

Besonders bevorzugt ist die Fernsteuerungseinrichtung zur Fernsteuerung des Verladeteleskops ausgelegt (z.B. mittels einer Ansteuerung der entsprechenden Programmroutinen eines Steuerungsrechners), um dem Fahrer auf einfache Weise die Bedienung der Beladestation zu ermöglichen. Optional kann der Beladevorgang mit der Femsteuerungsvorrichtung auch gestartet und gestoppt werden.

Eine besonders gute Kontrolle und Fernsteuerung des Verladeteleskops lässt sich dadurch realisieren, wenn die Videokamera direkt am unteren Ende des Verladeteleskops angeordnet ist.

Es ist ferner zweckmäßig, die Fernsteuerungseinrichtung zur Fernsteuerung des Verladeteleskops über einen Steuerungseinrichtung der Verladestation auszulegen.

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnung näher beschrieben. Es zeigt:
- Fig. 1: eine schematische Darstellung einer Vorrichtung zum Beladen von Fahrzeugen mit schütt- und/oder fließfähigen Gütern; und
- Fig. 2: eine Ausschnittsvergrößerung aus Fig. 1.

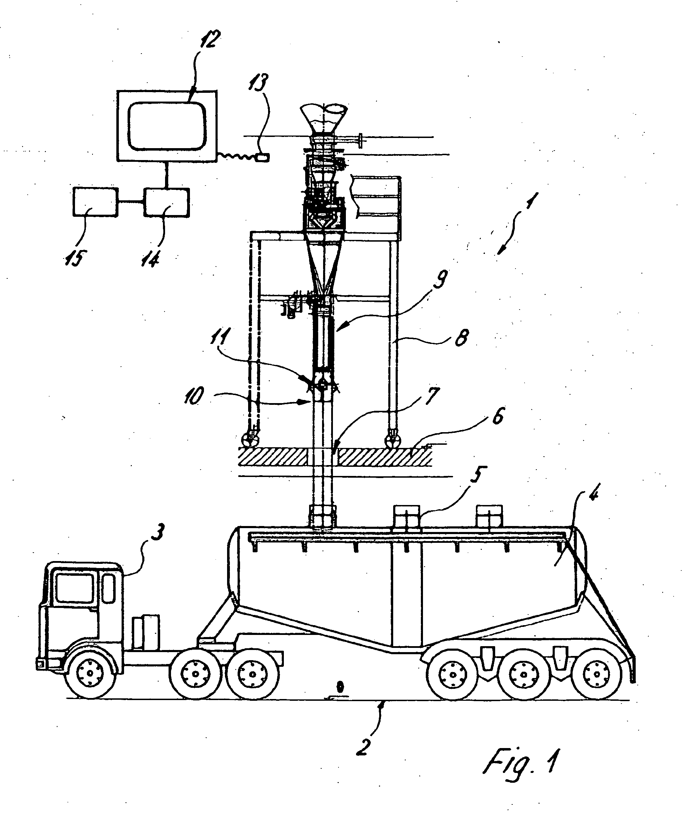

Die Vorrichtung zum Beladen von Fahrzeugen nach Fig. 1 umfasst eine Beladestation 1 mit einem Belade- und Abstellplatz 2 für das zu beladende Fahrzeug, hier ein Nutzfahrzeug 3. Das Nutzfahrzeug 3 umfaßt einen zu befüllenden Laderaum, hier einen Tank 4, der an seiner Oberseite mehrere Füllturme 5 aufweist.

Oberhalb des Beladeplatzes 2 ist ein Gerüst 6 mit einer Durchgangsöffnung 7 angeordnet. Auf dem Gerüst 6 ist wiederum ein Gestell 8 verfahrbar angeordnet, an dem ein Verladeteleskop 9 befestigt ist, welches in der Position der Fig. 1 aus seiner oberen eingezogenen Stellung, in welcher das Gestell 8 auf dem Gerüst 6 verfahrbar ist, durch die Durchgangsöffnung 7 in eine untere Verladeposition verfahrbar ist, in welcher das Verladeteleskop 9 mit seinem unteren freien Ende 10 in einen der Fülltürme 5 hineinragt, so dass das Füllgut durch das Verladeteleskop 9 hindurch in den Laderaum 4 eingefüllt werden kann.

Bevorzugt an dem Verladeteleskop 9 - oder an einem sonstigen Bauteil der Verladestation wie am Gestell 8 - ist in dem unteren, dem Nutzfahrzeug 3 zugewandten Bereich eine Videokamera 11 angeordnet, welche über einen Sender (hier nicht dargestellt) mit einer Sende- und/oder Empfangseinrichtung 14 mit zugeordneter Femsteuerungsvorrichtung 15 (nach Art eines Joysticks oder auch als Touchscreen mit dem Monitor vereinbar) an einem tragbaren Monitor 12 in Verbindung steht. Der Monitor ist wiederum hier auf einfache Weise über eine Steckvorrichtung 13 an einen hier nichtdargestellten Zigarettenanzünder des Fahrzeugs anschließbar.

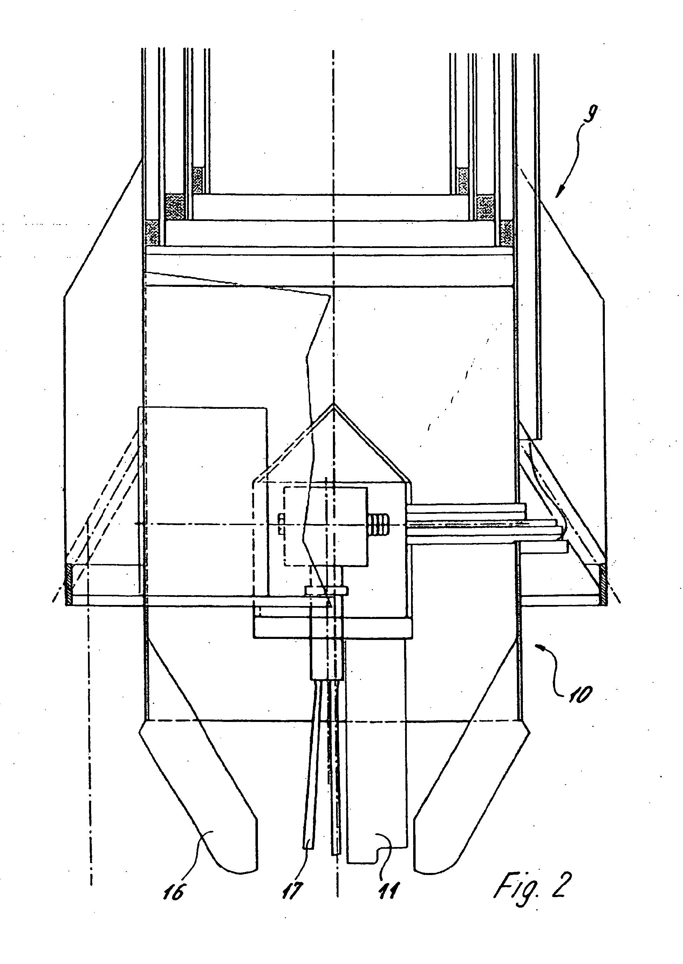

Die Videokamera 11 sowie eine Justiereinrichtung 16 für die Fülltürme bzw. Verladedome 5 sowie ein Füllstandsmelder 17 sind am freien Ende des Verladeteleskops 9 sind besonders gut in Fig. 2 zu erkennen.

Mit der Vorrichtung geht eine Beladung des Nutzfahrzeuges 3 wie folgt vor sich.

Nachdem auf oder am Ladeabstellplatz 2 mit einer Wägevorrichtung das Leergewicht des Nutzfahrzeuges 3 festgestellt wurde, erhält der Fahrer vom Bedienpersonal der Beladestation 1 neben seinen üblichen Unterlagen (Papiere, Daten u.dgl.) den Monitor sowie eine Sende- und/oder Empfangseinrichtung, die auch in den Monitor 12 integriert sein kann.

Nachdem das Nutzfahrzeug 2 seine Parkposition in der Beladestation 1 erreicht hat, wird der Fahrer zunächst von einer Bedienperson eingewiesen. Dabei gibt die Bedienperson Verladedaten (Produkt, Sollgewicht usw.) in einen Rechner ein und lässt das Verladeteleskop 9 zum ersten Füllturm 5 hinab, beispielsweise so weit, bis das freie Ende 10 des Verladeteleskops 9 in den Füllturm 5 hineinragt. Anschließend startet die Bedienperson die Verladung. Damit ist die Notwendigkeit zur Mitarbeit am Ablauf der Lkw-Beladung beendet, so daß die Bedienperson anderen Tätigkeiten nachgehen kann.

Auf dem vom Zigarettenanzünder über den Stecker 13 mit Strom versorgten Monitor 12 kann sodann der Fahrer des Nutzfahrzeuges 2 das Andocken und die weitere Beladung überwachen.

Sobald der am ersten Füllturm zu erreichende Zähl- oder Füllstand erreicht ist, erhält der Fahrer auf seinem Monitor 12 ein Signal, welches ihm signalisiert, daß er mittels der Fernsteuerungsvorrichtung 15 (die in die Sende- und Empfangseinrichtung 14 integriert oder separat ausgebildet ist) das Verladeteleskop aus dem Füllturm 5 zurückfahren kann. Sodann kann er das Nutzfahrzeug 2 soweit vorfahren, bis er mit dem nächsten Füllturm 5 unter dem Verladeteleskop 9 steht. Mittels der Fernsteuerung wird das Verladeteleskop 9 wieder abgesenkt und die unterbrochene Befüllung emeut gestartet bzw. wieder aufgenommen. Dieser Vorgang kann bis zum Erreichen des eingestellten bzw. gewünschten Gesamtgewichtes wiederholt werden. Beim Erreichen des Sollgewichtes abzüglich der Restmenge im Einlauf und der Andockvorrichtung wird ein Signal an die Bedienperson gegeben, damit diese ggf. noch eine Restentleerung durchführt und anschließend das Verladeteleskop 9 ganz einfährt.

Danach fährt der Fahrer das Nutzfahrzeug 2 auf eine Kontrollwaage. Bei dieser Gelegenheit werden der Monitor 12 und die Sende- und Empfangseinrichtung wieder abgegeben.

### Bezugszeichen

- Beladestation: 1
- Beladeplatz: 2
- Nutzfahrzeug: 3
- Tank: 4
- Füllturm: 5
- Gerüst: 6
- Durchgangsöffnung: 7
- Gestell: 8
- Verladeteleskop: 9
- freies Ende: 10
- Videokamera: 11
- Monitor: 12
- Steckvorrichtung: 13
- Sende- und/oder Empfangseinrichtung: 14
- Fernsteuerungsvorrichtung: 15
- Justiereinrichtung: 16
- Füllstandsmelder: 17

## Patentansprüche

1. Vorrichtung zum Beladen von Fahrzeugen mit schütt- und/oder fließfähigen Gütern, die folgendes aufweist:
a) eine Beladestation (1) mit einem Belade- und Abstellplatz (2) für ein zu beladendes Fahrzeug, insbesondere ein Fahrzeug, dessen Laderaum an seiner Oberseite mehrere Fülltürme (5) aufweist,
b) ein Verladeteleskop (9), welches aus einer oberen eingefahrenen Stellung in eine untere ausgefahrene Verladestellung verfahrbar ist, in welcher das Füllgut in den Laderaum (4) des Nutzfahrzeugs (3) einfüllbar ist,
c) eine Videokamera (11),
d) die Videokamera (11) an eine Sendeeinrichtung angeschlossen ist, mittels der die von der Videokamera aufgenommenen Bilder an eine Sende- und Empfangseinrichtung (14) übertragbar sind,
e) an die Sende- und Empfangseinrichtung (14) zumindest eine Fernsteuerungseinrichtung (15) und ein Monitor (12) angeschlossen sind,
**dadurch gekennzeichnet, dass**
f) die Sende- und Empfangseinrichtung (14) portabel ist, und
g) dass die Fernsteuerungseinrichtung (15) zur Fernsteuerung des Verladeteleskops (9) ausgelegt ist.

2. Vorrichtung nach Anspruch 1, **dadurch gekennzeichnet, daß** die Fernsteuerungseinrichtung (15) zum Starten und Stoppen des Verladevorgangs ausgelegt ist.

3. Vorrichtung nach einem der vorstehenden Ansprüche, **dadurch gekennzeichnet, daß** die Videokamera am unteren Ende des Verladeteleskops (9) angeordnet ist.

4. Vorrichtung nach einem der vorstehenden Ansprüche, **dadurch gekennzeichnet, daß** die Fernsteuerungseinrichtung (15) zur Fernsteuerung des Verladeteleskops (9) über eine Steuerungseinrichtung der Verladestation ausgelegt ist.

5. Vorrichtung nach einem der vorstehenden Ansprüche, **dadurch gekennzeichnet, daß** die Videokamera am Verladeteleskop (9) befestigt ist.

6. Vorrichtung nach einem der vorstehenden Ansprüche, **dadurch gekennzeichnet, daß** die Fernsteuerungseinrichtung (15) nach Art eines Joysticks oder nach Art eines Touchscreens ausgebildet ist.

7. Vorrichtung nach einem der vorstehenden Ansprüche, **dadurch gekennzeichnet, daß** der Monitor und/oder die Fernsteuerungseinrichtung (15) mittels einer Steckvorrichtung (13) an einen Zigarettenanzünder des Fahrzeugs anschließbar ist.

8. Verfahren zum Betreiben einer Vorrichtung nach einem der vorstehenden Ansprüche mittels eines Monitors (10) und einer Femsteuereinrichtung (15), **dadurch gekennzeichnet, daß** mittels einer portablen Sende- und Empfangseinrichtung (14) das Verladeteleskop (9) betätigt und der Beladevorgang mit dem Schüttgut gesteuert wird, wobei der Monitor (17) und die Fernsteuereinrichtung der Sende- und Empfangseinrichtung (14) zugeordnet sind.

## Claims

1. Device for loading vehicles with bulk materials and/or flowable materials, which device has the following:
a) a loading station (1) with a loading and depositing place (2) for a vehicle to be loaded, in particular a vehicle, the loading compartment of which has a plurality of filling towers (5) on its top side,
b) a telescopic loading means (9) which can be moved from an upper retracted position into a lower extended loading position in which the filling material can be poured into the loading compartment (4) of the utility vehicle (3),
c) a video camera (11),
d) the video camera (11) is connected to a transmitting device by means of which the images recorded by the video camera can be transmitted to a transmitting and receiving device (14),
e) at least remote control device (15) and a monitor (12) are connected to the transmitting and receiving device (14),
**characterized in that**
f) the transmitting and receiving device (14) is portable, and
g) **in that** the remote control device (15) is designed for the remote control of the telescopic loading means (9).

2. Device according to Claim 1, **characterized in that** the remote control device (15) is designed for starting and stopping the loading operation.

3. Device according to one of the preceding claims, **characterized in that** the video camera is arranged at the lower end of the telescopic loading means (9) .

4. Device according to one of the preceding claims, **characterized in that** the remote control device (15) is designed for the remote control of the telescopic loading means (9) via a control device of the loading station.

5. Device according to one of the preceding claims, **characterized in that** the video camera is fastened to the telescopic loading means (9).

6. Device according to one of the preceding claims, **characterized in that** the remote control device (15) is designed in the manner of a joystick or in the manner of a touch screen.

7. Device according to one of the preceding claims, **characterized in that** the monitor and/or the remote control device (15) can be connected to a cigarette lighter of the vehicle by means of a plug-in device (13).

8. Method for operating a device according to one of the preceding claims by means of a monitor (12) and a remote control device (15), **characterized in that** the telescopic loading means (9) is actuated and the loading operation with the bulk material is controlled by means of a portable transmitting and receiving device (14), the monitor (12) and the remote control device being assigned to the transmitting and receiving device (14).

## Revendications

1. Dispositif pour charger des véhicules avec des marchandises déversables et/ou fluides, qui comporte les éléments suivants :
a) une station de chargement (1) avec un emplacement de chargement et de stockage (2) pour un véhicule à charger, en particulier un véhicule, dont l'espace de chargement présente plusieurs tours de chargement (5) sur son côté supérieur,
b) un télescope de chargement (9), qui peut être déplacé de sa position supérieure rentrée dans une position de chargement inférieure sortie, dans laquelle le produit à charger peut être versé dans l'espace de chargement (4) du véhicule utilitaire (3),
c) une caméra vidéo (11),
d) la caméra vidéo (11) est raccordée à un dispositif d'émission, au moyen duquel les images prises par la caméra vidéo peuvent être transmises à un dispositif d'émission et de réception (14),
e) au moins un appareil de télécommande (15) et un écran (12) sont raccordés au dispositif d'émission et de réception (14),
**caractérisé en ce que**
f) le dispositif d'émission et de réception (14) est portable, et
g) **en ce que** le dispositif de télécommande (15) est conçu pour la télécommande du télescope de chargement (9).

2. Dispositif selon la revendication 1, **caractérisé en ce que** le dispositif de télécommande (15) est conçu pour le démarrage et l'arrêt de l'opération de chargement.

3. Dispositif selon l'une quelconque des revendications précédentes, **caractérisé en ce que** la caméra vidéo est disposée sur l'extrémité inférieure du télescope de chargement (9).

4. Dispositif selon l'une quelconque des revendications précédentes, **caractérisé en ce que** le dispositif de télécommande (15) est conçu pour la télécommande du télescope de chargement (9) au moyen du dispositif de commande de la station de chargement.

5. Dispositif selon l'une quelconque des revendications précédentes, **caractérisé en ce que** la caméra vidéo est fixée sur le télescope de chargement (9).

6. Dispositif selon l'une quelconque des revendications précédentes, **caractérisé en ce que** le dispositif de télécommande (15) est conçu à la façon d'un joystick ou à la façon d'un écran tactile.

7. Dispositif selon l'une quelconque des revendications précédentes, **caractérisé en ce que** l'écran et/ou le dispositif de télécommande (15) peut être raccordé au moyen d'un dispositif d'emboîtement (13) sur un allume-cigare du véhicule.

8. Procédé pour l'exploitation d'un dispositif selon l'une quelconque des revendications précédentes au moyen d'un écran (10) et d'un dispositif de télécommande (15), **caractérisé en ce que** le télescope de chargement (9) est actionné et l'opération de chargement avec le produit à verser est commandée au moyen d'un dispositif d'émission et de réception (14) portable, l'écran (17) et le dispositif de télécommande étant attribués au dispositif d'émission et de réception (14).
